# EUROPEAN PATENT APPLICATION

(11) **EP 1 615 117 A2**
(43) Date of publication of application: **11.01.2006**
(21) Application number: 05103381.9
(22) Date of filing: 26.04.2005
(51) Int. Cl.: G06F 3/033

(54) **Universal controller help on a multimedia system**

(30) Priority: 30.04.2004 US 836752
(71) Applicant: MICROSOFT CORPORATION, Redmond, WA 98052 (US)
(72) Inventor: Macauley, James D., Redmond, WA 98052 (US); Whitten, Jon Marcus Randall, Redmond, WA 98052 (US)
(74) Representative: Zimmer, Franz-Josef

(57) **Abstract**

A system architecture within a multimedia console having a host application that provides information to a user related to a configuration of a controller of a multimedia application with which user is currently interacting A system application residing in the memory and running concurrently with a multimedia application receives a request to display the active controller configuration and displays a graphical representation of the active configuration. The configuration may be stored in a user profile and retrieved or applied to all similar types of applications.

## Description

### COPYRIGHT NOTICE / PERMISSION

A portion of the disclosure of this patent document contains material, which is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice applies to the software and data as described below and in the drawings hereto: Copyright © 2004, Microsoft Corporation, All Rights Reserved.

### FIELD OF THE INVENTION

This invention generally relates to the field of multimedia devices. In particular, the present invention is directed to a system architecture that provides a graphical display of a multimedia controller and enables users to remap controls of the controller.

### BACKGROUND OF THE INVENTION

Conventional multimedia devices, such as gaming consoles provide a very limited ability for users to customize their experience. In particular, it is difficult for users to obtain help regarding controller key functionality and to remap keys to reflect a preference. This causes frustration for users, especially because applications tend have a different key mappings on the controller that may not reflect the users' preferences. This often causes users to press the wrong button when interacting with the applications because a particular key may have completely different uses in the different application, even though the applications are very similar.

Another problem in conventional multimedia devices is that there is no way to set a profile where controller keys are automatically mapped based on user preferences for a particular type of application. If users are able to customize the keys, they must specify key mappings on a per application basis, which is time consuming.

As multimedia devices grow in power, more complex applications will developed, which will create a growing desire among users to customize their experience. Thus, there is a need for a system and method of enabling users to obtain help regarding controller key mappings and for customization of the key mappings. The present invention provides such a solution.

### SUMMARY OF THE INVENTION

This present invention is directed to a system architecture having a host application that provides information to a user regarding a controller key mapping. In addition, the user may remap the keys of the controller and such remapping will be reflected in the information provided to the user. In accordance with an aspect of the invention, there is provided a multimedia console having a central processing unit, a graphics processing unit, a memory, and an input device. A system application residing in the memory and running concurrently with a multimedia application sets a configuration of the input device and reports the configuration to the multimedia application. In response to a user input, the system application displays the configuration of the input device as a graphical image.

In accordance with a feature of the invention, the system application reads a user profile and modifies the configuration in accordance with the user profile. The system application may update a mapping of the input device and store the updated mapping in the user profile. Also, the updated mapping may be applied to multimedia applications similar to the multimedia application executing on the multimedia console.

In accordance with another feature, the system application updates a mapping of the input device and updates the graphical image in response to updating the mapping of the input device.

In accordance with yet another feature, the system application determines a type of multimedia application executing on the multimedia console and retrieves the configuration for the input device from a user profile based on the type of multimedia application. The system application may reconfigure a mapping of the input device in accordance with an input and store the mapping in the user profile.

In accordance with another aspect of the invention, there is provided in a multimedia console having a central processing unit, a graphics processing unit, a memory, and an input device, a method of providing configuration information of a controller for use with a multimedia application during the execution of the multimedia application. The method includes setting a configuration of the controller, reporting the configuration to the multimedia application, and, in response to an input, displaying the configuration of the controller as a graphical image during the execution of the multimedia application.

Additional features and advantages of the invention will be made apparent from the following detailed description of illustrative embodiments that proceeds with reference to the accompanying drawings.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:

Fig. 1 is a block diagram showing a multimedia console in which aspects of the present invention may be implemented;

Fig. 2 is an block diagram illustrating an application manager;

Fig. 3 is a flowchart of the processes performed by the present invention;

Fig. 4 is an exemplary user interface illustrating information related to a controller key mapping; and

Fig. 5 is an exemplary user interface illustrating information related to a controller key mapping after keys have been remapped.

### DETAILED DESCRIPTION OF ILLUSTRATIVE EMBODIMENTS

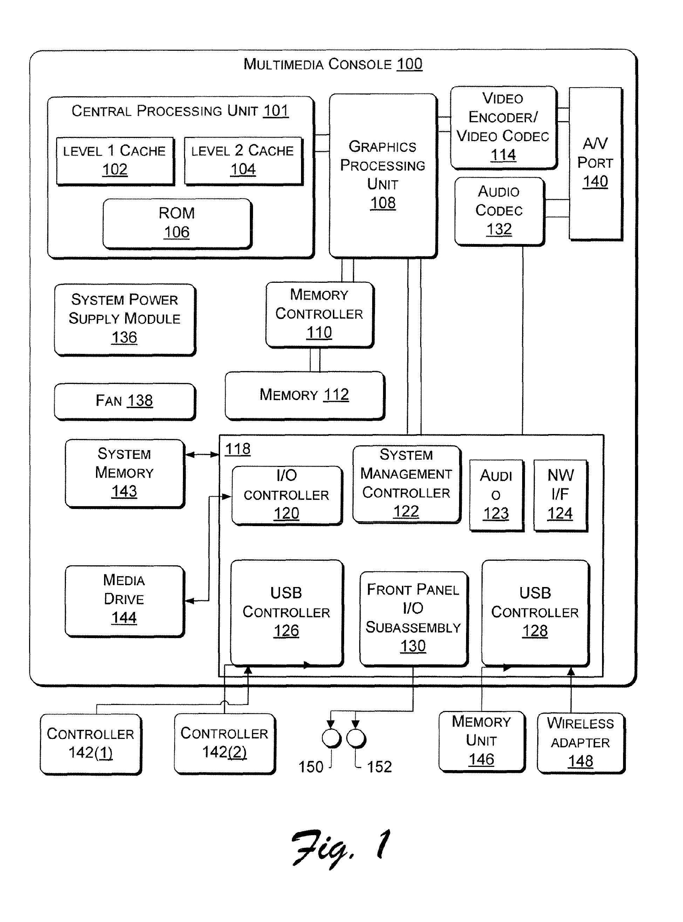

Fig. 1 illustrates the functional components of a multimedia console 100 in which certain aspects of the present invention may be implemented. The multimedia console 100 has a central processing unit (CPU) 101 having a level 1 cache 102, a level 2 cache 104, and a flash ROM (Read Only Memory) 106. The level 1 cache 102 and a level 2 cache 104 temporarily store data and hence reduce the number of memory access cycles, thereby improving processing speed and throughput. The CPU 101 may be provided having more than one core, and thus, additional level 1 and level 2 caches 102 and 104. The flash ROM 106 may store executable code that is loaded during an initial phase of a boot process when the multimedia console 100 is powered ON.

A graphics processing unit (GPU) 108 and a video encoder/video codec (coder/decoder) 114 form a video processing pipeline for high speed and high resolution graphics processing. Data is carried from the graphics processing unit 108 to the video encoder/video codec 114 via a bus. The video processing pipeline outputs data to an A/V (audio/video) port 140 for transmission to a television or other display. A memory controller 110 is connected to the GPU 108 to facilitates processor access to various types of memory 112, such as, but not limited to, a RAM (Random Access Memory).

The multimedia console 100 includes an I/O controller 120, a system management controller 122, an audio processing unit 123, a network interface controller 124, a first USB host controller 126, a second USB controller 128 and a front panel I/O subassembly 130 that are preferably implemented on a module 118. The USB controllers 126 and 128 serve as hosts for peripheral controllers 142(1)-142(2), a wireless adapter 148, and an external memory device 146 (e.g., flash memory, external CD/DVD ROM drive, removable media, etc.). The network interface 124 and/or wireless adapter 148 provide access to a network (e.g., the Internet, home network, etc.) and may be any of a wide variety of various wired or wireless interface components including an Ethernet card, a modem, a Bluetooth module, a cable modem, and the like.

System memory 143 is provided to store application data that is loaded during the boot process. A media drive 144 is provided and may comprise a DVD/CD drive, hard drive, or other removable media drive, etc. The media drive 144 may be internal or external to the multimedia console 100. Application data may be accessed via the media drive 144 for execution, playback, etc. by the multimedia console 100. The media drive 144 is connected to the I/O controller 120 via a bus, such as a Serial ATA bus or other high speed connection (e.g., IEEE 1394).

The system management controller 122 provides a variety of service functions related to assuring availability of the multimedia console 100. The audio processing unit 123 and an audio codec 136 form a corresponding audio processing pipeline with high fidelity and stereo processing. Audio data is carried between the audio processing unit 123 and the audio codec 126 via a communication link. The audio processing pipeline outputs data to the A/V port 140 for reproduction by an external audio player or device having audio capabilities.

The front panel I/O subassembly 130 supports the functionality of the power button 150 and the eject button 152, as well as any LEDs (light emitting diodes) or other indicators exposed on the outer surface of the multimedia console 100. A system power supply module 136 provides power to the components of the multimedia console 100. A fan 138 cools the circuitry within the multimedia console 100.

The CPU 101, GPU 108, memory controller 110, and various other components within the multimedia console 100 are interconnected via one or more buses, including serial and parallel buses, a memory bus, a peripheral bus, and a processor or local bus using any of a variety of bus architectures.

When the multimedia console 100 is powered ON, application data may be loaded from the system memory 143 into memory 112 and/or caches 102, 104 and executed on the CPU 101. The application may present a graphical user interface that provides a consistent user experience when navigating to different media types available on the multimedia console 100. In operation, applications and/or other media contained within the media drive 144 may be launched or played from the media drive 144 to provide additional functionalities to the multimedia console 100.

The multimedia console 100 may be operated as a standalone system by simply connecting the system to a television or other display. In this standalone mode, the multimedia console 100 allows one or more users to interact with the system, watch movies, or listen to music. However, with the integration of broadband connectivity made available through the network interface 124 or the wireless adapter 148, the multimedia console 100 may further be operated as a participant in a larger network community.

When the multimedia console 100 is powered ON, a set amount of hardware resources are reserved for system use by the multimedia console operating system. These resources may include a reservation of memory (e.g., 16MB), CPU and GPU cycles (e.g., 5%), networking bandwidth (e.g., 8 kbs), etc. Because these resources are reserved at system boot time, the reserved resources do not exist from the application's view.

In particular, the memory reservation preferably is large enough to contain the launch kernel, concurrent system applications and drivers. The CPU reservation is preferably maintained at a constant level.

With regard to the GPU reservation, lightweight messages generated by the system applications (e.g.,. popups) are displayed by using a GPU interrupt to schedule code to render popup into an overlay. The amount of memory required for an overlay depends on the overlay area size and the overlay preferably scales with screen resolution. Where a full user interface is used by the concurrent system application, it is preferable to use a resolution independent of game resolution. A scaler may be used to set this resolution such that the need to change frequency and cause a TV resynch is eliminated.

After the multimedia console 100 boots and system resources are reserved, concurrent system applications execute to provide system functionalities. The system functionalities are encapsulated in a set of system applications that execute within the reserved system resources described above. The operating system kernel identifies threads that are system application threads versus multimedia application threads. The system applications are preferably scheduled to run on the CPU 101 at predetermined times and intervals in order to provide a consistent system resource view to the application. The scheduling is to minimize cache disruption for the multimedia application running on the console.

When a concurrent system application requires audio, audio processing is scheduled asynchronously to the multimedia application due to time sensitivity. A multimedia console application manager (described below) controls the multimedia application audio level (e.g., mute, attenuate) when system applications are active.

Input devices (e.g., controllers 142(1) and 142(2)) are shared by multimedia applications and system applications. The input devices are not reserved resources, but are to be switched between system applications and the multimedia application such that each will have a focus of the device. The application manager preferably controls the switching of input stream, without knowledge the multimedia application's knowledge and a driver maintains state information regarding focus switches.

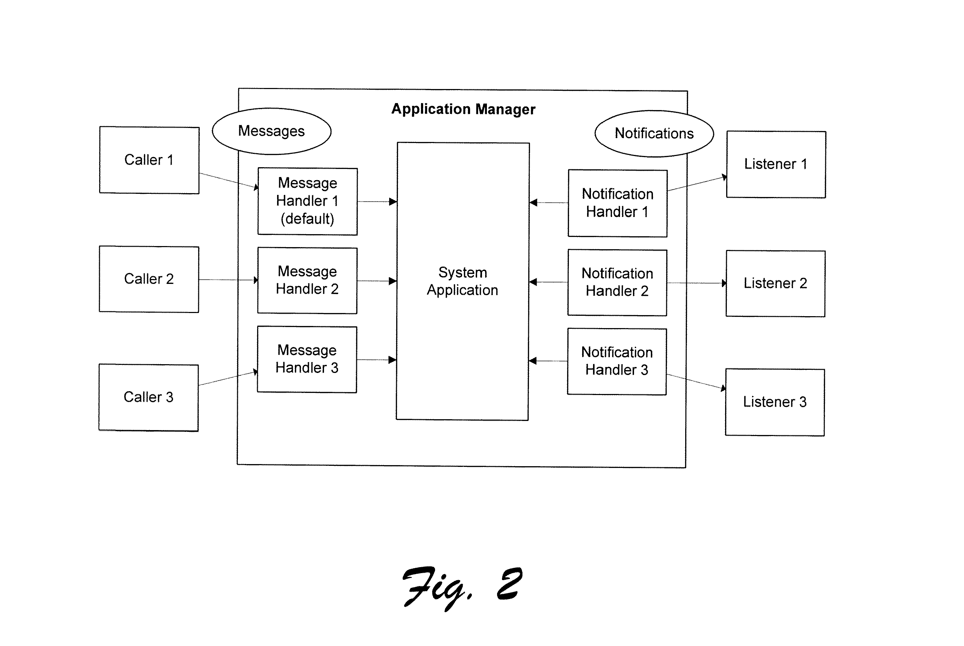

Referring to Fig. 2, there is illustrated the application manager and its relationship to the system applications and multimedia applications. The communication to system applications is preferably message based. APIs are exposed to the multimedia applications that wrap messages. Communication from the system applications is notification based. Multiple listeners and multiple callers are supported using small proxy objects.

As noted above, concurrent system applications provide system functionalities as the multimedia application executes, and require little, if any, support from the multimedia application. As will now be described in further detail, an exemplary system functionality provided by a concurrent application is the storage and retrieval of information related to the configuration of the controller 142 used with an application running on the multimedia console 100. The console 100 stores user information in a profile, such that preferences may be retrieved and applied for all applications of a particular type, etc. For example, a user profile may specify that a particular button on the controller 142 is mapped to an action (e.g., move left) for all applications running on the multimedia console 100, or particular types of applications. The same button may be mapped to a different command for different types of applications based on the user profile. Further, the user profile may override a default mapping specified by the application.

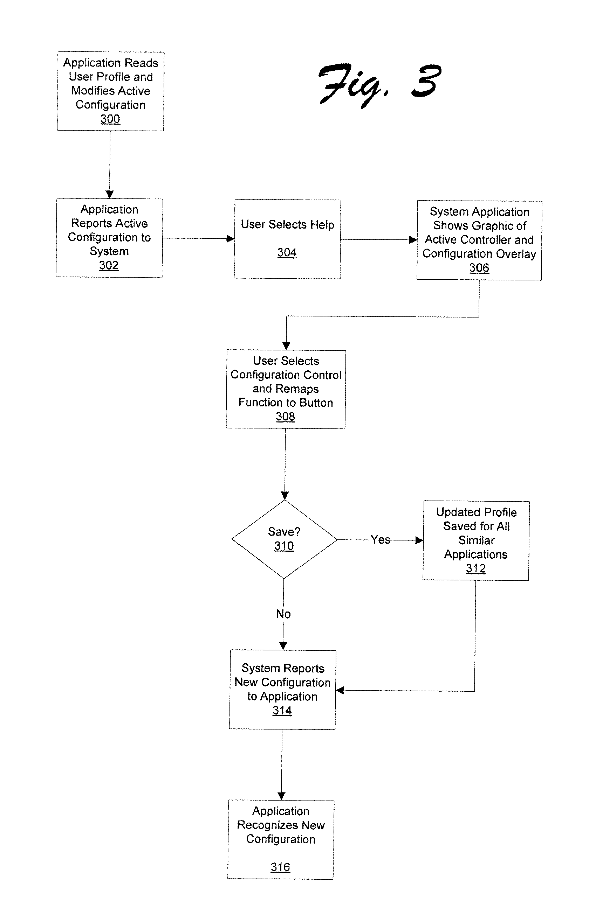

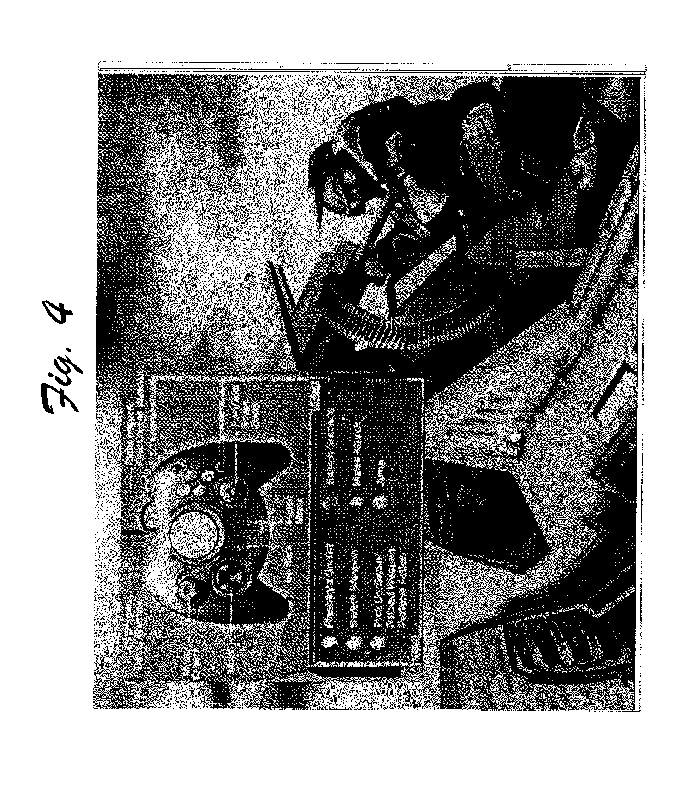

Referring to Fig. 3, there is illustrated an exemplary flowchart of the processes performed by the present invention to enable a graphical display of the configuration of the controller 142 for the particular application running on the console 100, as well as the updating of a user profile of preferences. Initially, when application executes, the application reads the user profile (if any) and modifies the active configuration based on the user profile (step 300). This preferably remaps keys on the controller to reflect the user's preference. The application then reports the configuration to the console 100 (step 302). If, during the execution of the application, the user requests help regarding the controller configuration (step 304), the console 100 displays a graphic of the controller and its configurations (step 306). An exemplary display is shown in Fig. 4, however it is noted that the present invention is not limited to the display shown in Fig. 4.

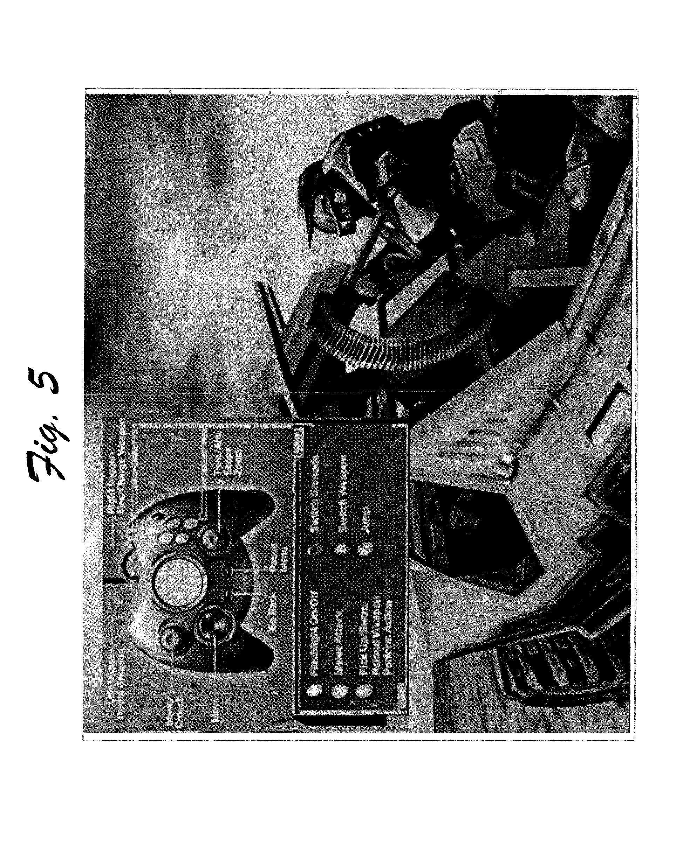

The user may desire to remap a function to a different button (step 308). For example, if the user changes the mapping of two keys ("Switch Weapon" and "Melee Attack" shown in Fig. 4), the change will be reflected in an updated graphic, as show in Fig. 5. After the user makes changes to the controller mapping, the user is next prompted to save the new configuration in the user's profile (step 310). If the user desires to make the mapping part of the user profile, the updated mapping is saved for all similar application types (step 312). The system then reports the new configuration to the application (step 314), whereby the user may interact with the application in accordance with the updated controller configuration (step 316).

While the present invention has been described in connection with the preferred embodiments of the various Figs., it is to be understood that other similar embodiments may be used or modifications and additions may be made to the described embodiment for performing the same function of the present invention without deviating therefrom.

## Claims

1. A multimedia console, comprising:
a central processing unit;
a graphics processing unit;
a memory; and
an input device;
wherein a system application residing in said memory and running concurrently with a multimedia application sets a configuration of said input device and reports the configuration to said multimedia application, and in response to an input, said system application displays the configuration of said input device as a graphical image.

2. The multimedia console of claim 1, wherein said system application reads a user profile and modifies the configuration in accordance with said user profile.

3. The multimedia console of claim 2, wherein said system application updates a mapping of said input device, and stores said updated mapping in said user profile.

4. The multimedia console of claim 3, wherein said updated mapping is applied to multimedia applications similar to said multimedia application executing on said multimedia console.

5. The multimedia console of claim 1, wherein said system application updates a mapping of said input device; and
updating said graphical image in response to updating the mapping of said input device.

6. The multimedia console of claim 1, wherein said system application determines a type of multimedia application executing on said multimedia console and retrieves said configuration for said input device from a user profile based on said type of multimedia application.

7. The multimedia console of claim 6, wherein said system application reconfigures a mapping of said input device in accordance with an input, and stores said mapping in said user profile.

8. In a multimedia console having a central processing unit, a graphics processing unit, a memory, and an input device, a method of providing configuration information of a controller for use with a multimedia application during the execution of said multimedia application, comprising:
setting a configuration of the controller;
reporting the configuration to said multimedia application; and
in response to an input, displaying the configuration of said controller as a graphical image during the execution of said multimedia application.

9. The method of claim 8, further comprising:
reading a user profile; and
modifying the configuration in accordance with said user profile.

10. The method of claim 9, further comprising:
updating a mapping of said controller; and
storing said updated mapping in said user profile.

11. The method of claim 10, wherein said updated mapping is applied to multimedia applications similar to said multimedia application executing on said multimedia console.

12. The method of claim 8, further comprising:
updating a mapping of said controller; and
updating said graphical image in response to updating the mapping of said controller.

13. The method of claim 8, said setting the configuration of the controller comprising determining a type of multimedia application executing on said multimedia console; and
retrieving said configuration for said controller from a user profile based on said type of multimedia application.

14. The method of claim 13, further comprising:
reconfiguring a mapping of said controller; and
storing said mapping in said user profile.

15. A computer-readable medium having computer-executable instructions for instructing a multimedia device to perform the steps of:
setting a configuration of the controller;
reporting the configuration to said multimedia application; and
in response to an input, displaying the configuration of said controller as a graphical image during the execution of said multimedia application.

16. The computer-readable medium of claim 15, further comprising instructions for performing:
reading a user profile; and
modifying the configuration in accordance with said user profile.

17. The computer-readable medium of claim 16, further comprising instructions for performing:
updating a mapping of said controller; and
storing said updated mapping in said user profile.

18. The computer-readable medium of claim 17, wherein said updated mapping is applied to multimedia applications similar to said multimedia application executing on said multimedia console.

19. The computer-readable medium of claim 15, further comprising instructions for performing:
updating a mapping of said controller; and
updating said graphical image in response to updating the mapping of said controller.

20. The computer-readable medium of claim 15, said setting the configuration of the controller comprising instructions for determining a type of multimedia application executing on said multimedia console; and
retrieving said configuration for said controller from a user profile based on said type of multimedia application.

21. The computer-readable medium of claim 20, further comprising instructions for performing:
reconfiguring a mapping of said controller; and
storing said mapping in said user profile.
